# EUROPEAN PATENT APPLICATION

(11) **EP 3 486 142 A1**
(43) Date of publication of application: **22.05.2019**
(21) Application number: 17728759.6
(22) Date of filing: 04.01.2017
(51) Int. Cl.: B62D 7/15

(54) **SELF-POWERED WHEEL AND DISC-TYPE 360 DEGREE POWER TURNING SYSTEM**

(30) Priority: 07.12.2015 CN 201510906467; 05.01.2016 CN 201620009862 U
(71) Applicant: Li, Mu, Dublin 14 (IE)
(72) Inventor: CHEN, Sentai, Chaoyang District, Beijing 100027 (CN)
(86) International application number: PCT/IB2017/050024
(87) International publication number: WO 2017/098489

(57) **Abstract**

A omnidirectional power steering system which can be used on wheeled vehicles that can travel on land without relying on tracks, the device comprises horizontal steering motors(1), teeth(2), bearing balls(3), a horizontal rotary disc(4), brake discs(5), a space for rotation of the extended brake discs(6), a rotating shaft(7), fixing members(8), an inner layer of the wheel hub motor(9), a tyre(10), a wheel hub(11), a space for tyre rotation(12), an operation space for replacing the tyre(13), a housing(14), brake calipers(15), an outer layer of the wheel hub motor(16), an A-arm(17), a control box(18), single chip microcomputers(19), a control panel(20), sensors(21), connecting rods(22), each tyre(10) can rotate to any angle independently, and can also be matched with other tyres to rotate a specific angle, the horizontal rotary disc(4) is a horizontal large gear, a wheel hub(11) is arranged in the middle space, and a wheel hub motor is mounted in the wheel hub(11), and the wheel hub motor is divided into the rotating layer and the non-rotating layer, the non-rotating layer is fixed on the horizontal rotary disc(4), the rotating layer of the wheel hub motor vertically rotates the wheel frame to drive the wheels to move forwards and backwards. When a steering wheel steers, a connection to the control box (18) is present, the control box (18) issues a signal to an independent turning power source, so that the independent turning power source controls the horizontal rotary disc (4) to steer horizontally, and the control box (18) controls each steering direction and each angle of the plurality of wheels according to a driver-selected steering mode. The steering system can achieve parallel parking, a 180 degree in situ zero rotation radius U-turn, a movement toward any direction from a static position and oblique movement, and can use a drift mode when steering at high speed and a plurality of wheel steering modes at different speeds. Inner and outer side wheels cooperative steering angles are optimized, and tyre wear-outs are significantly reduced.

## Description

### TECHNICAL FIELD

This disclosure is a self-powered wheel and disc type omnidirectional power steering system, it can be applied to wheeled vehicles that can travel on land without orbits.

### BACKGROUND ART

There are two types of steering system of vehicles: mechanical steering system and power steering system

The mechanical steering system takes the driver's physical strength as the steering energy, in which all the force-passing parts are mechanical. The mechanical steering system consists of three parts, steering control mechanism, steering devices and steering drive mechanism.

The power steering system is a steering system which uses both the driver's physical strength and the engine power as steering power. Under normal circumstances, only a small portion of the energy required for a vehicle to turn is provided by the driver, most of the power is provided by the engine through a power steering device. However, the driver should be able to steer the vehicle independently when the power steering device fails. Therefore, the power steering system is formed by adding a set of power steering devices on the basis of the mechanical steering system. With the rapid development of automobile industry, the structures of steering devices have changed greatly. There are many different structures of steering devices. There four popular types steering devices: Worm Shaw (WP type), Worm Gear Roller (WR type), Recirculating Ball (BS type), Rack and Pinion (RP type). These four steering devices types have been widely used in automobiles.

Around the world, the Recirculating Ball type steering devices are accounted for about 45%, Rack and Pinion type are accounted for about 40%, Worm Gear Roller type are accounted for about 10%, other types of steering devices are accounted for 5%. The Recirculating Ball type steering device has been developing steadily. In western European sedans, there is a great development of Rack and Pinion type. The Recirculating Ball type steering device has become more and more popular in Japanese car. Different types of steering devices are equipped with various models of Japanese cars with different models of engines. The Recirculating Ball type used in the bus has reached current 100% from 62.5% from the 60 's. (Worm Gear Roller type used in the bus has been eliminated.) Most of the large and small trucks use Recirculating Ball type, but there are some developments of Rack and Pinion type as well. The Recirculating Ball type steering device are accounted for 65% of the minivan, and the rest 35% are Rack and Pinion type.

Recirculating Ball type steering device: This is comprised of mainly by screws, nuts, steering device housing and a number of small steel balls. The so-called Recirculating Ball refers to these small steel balls. They are placed in the closed pipes between nuts and screws which make turns the sliding friction between nuts and screws into a smaller resistance of rolling friction effect. The screw pushes the nut up and down when the screw that is fastened to the steering wheel turning tube starts to turn. The nuts work through the gears to drive the turning rocker arm back and forth to make a turn. In this process, these small steel balls in the closed pipes are recirculate to roll back and forth, so this type of steering device is called the Recirculating Ball type steering device. Rack and Pinion type steering device: It is one of the most common steering device. The basic structure is a pair of small gears and rack meshing with each other. When the shaft belt drives the pinion to rotate, the rack moves in a linear movement. Sometimes, the rack drives directly the tie rod can make the wheel turn. So, this is one of the simplest steering device.

The above steering systems are limited by the tyres need to be fixed on the axle. Since there will be dead points between the pitman arm and steering rod and the steering-knuckle arm, the maximum steering angle are up to 60 degrees for the front wheel to turn left or right. Therefore, the vehicle can turn in certain angles but could not perform a parallel parking, a gyration with the center of gravity of the vehicle in situ, and parallel movements to any angel. The inside tyre is suffering more pressure than outside tyre while the steering angles are the same for the inside tyre and outside tyre during steering. Due to safety reason, one must replace both inside and outside tyres at the same time, so the outside tyre with less wear-out is wasted. The wear-out tyres became powder to pollute air. China consumes millions of tons of tyres per year. If both inside and outside tyres can wear out evenly, the life of tires can prolong. For individuals, it can significantly reduce unnecessary tire consumption; For the country, it can significantly reduce unnecessary waste of resources to achieve green GDP.

### BRIEF SUMMARY OF THE DISCLOSURE

The disclosure provides a steering system which is completely different from the current traditional steering system used in current vehicles. The disclosure allows each tyre of the vehicle not only turns 360 degrees without limitation by an axle since there is not an axle, but also coordinates to each other.
In order to solve the above problem, the technical scheme adopted by the disclosure is: A omnidirectional power steering system which can be used on wheeled vehicles that can travel on land without relying on tracks, the device comprises horizontal steering motors, teeth, bearing balls, a horizontal rotary disc, brake discs, a space for rotation of the brake discs, a rotating shaft, fixing members, an inner layer of the wheel hub motor, a tyre, a wheel hub, a space for tyre rotation, an operation space for replacing the tyre, a housing, brake calipers, an outer layer of the wheel hub motor, an A-arm, a control box, single chip microcomputers, a control panel, sensors, connecting rods, each tyre can rotate to any angle independently, and can also be matched with other tyres to rotate a specific angle, the horizontal rotary disc is a horizontal large gear, a wheel hub is arranged in the middle space, and a wheel hub motor is mounted in the wheel hub, and the wheel hub motor is divided into the rotating layer and the non-rotating layer, the non-rotating layer is fixed on the horizontal rotary disc, the rotating layer of the wheel hub motor vertically rotates the wheel frame to drive the wheels to move forwards and backwards, the independent steering power source rotates the horizontal rotary disc horizontally by a gear which it rotates clockwise or counterclockwise to achieve the purpose of steering left or right, the rotating angles of the inner wheel and the outer wheel are controlled by a control box and the optimal cooperation of the inner tyres' rotation angles and the outer tyres' rotation angles by different speeds can be achieved.

In the above technical scheme, more specific technical solutions can also be: During the operation of the vehicle equipped with the disclosure, the steering wheel use electric power to drive the horizontal steering motor. The horizontal steering motor use gear to rotate horizontal rotary disc. Since the non-rotating layer of the wheel hub motor is mounted on the horizontal rotary disc, the horizontal rotary disc will drive the wheel hub and tyre to turn with the same directions and angles so that the turn can be completed. The steering angle of the inside and outside wheel is controlled by the control box to obtain the best coordinated angles of the inside and outside wheels of all steering radiuses when turning at different speeds.

With the adoption of the above technical scheme, this disclosure has the following beneficial effects compared with the current technology: Parallel parking and gyration with the center of gravity of the vehicle in situ can be achieved by this disclosure. A vehicle with this disclosure can move to any direction, to perform an oblique movement from a static position, can choose to the drift mode during high-speed turns, achieve the best coordinated steering angles between the steering angles of inside wheels and the steering angles of outside wheels which can reduce a great amount of tyre wear-out, and there are multiple steering modes from various speeds.

### THE TECHNICAL CHARACTERISTICS OF THE DISCLOSURE

The characteristics of the wheel hub motor described in the disclosure are as follows, wherein the wheel hub motor rotates vertically which is mounted in a wheel hub, is used for rotating a wheel hub and a tyre, divided into two layers, an inner layer of the wheel hub motor and the outer layer of the wheel hub motor, at the moment, the outer layer of the wheel hub motor is a non-rotating layer and is fixed on the horizontal rotary disc which can rotate 360 degrees horizontally therefore driving the wheel hub and the tyre turn, the wheel hub is locked on the inner layer of the wheel hub motor, the inner layer is the center of the rotating layer which rotates vertically to drive the wheel hub and the tyre to move forwards and backwards, and the rotating direction can be controlled independently, the rotating layer of the wheel hub motor can rotate vertically clockwise or counterclockwise and the rotation speed can be controlled individually.

The functions of the inner layer and the outer layer of the wheel hub motor can be interchanged, then the outer layer of the wheel hub motor can be used as a vertical rotating layer to drive the wheel hub and the tyre, the wheel hub is fixed on the outer layer of the wheel hub motor, the inner layer of the wheel hub motor is fixed on the horizontal rotary disc instead, at the moment, the vertical inner layer is a non-rotating layer, can turn clockwise or counterclockwise omnidirectional with the horizontal rotary disc, the wheel hub motor can also be mounted at any part of the wheel to drive the rotating layer and/or the rotating shaft of the wheel to rotate through the transmission devices.

The characteristics of the wheel hub described in the disclosure are as follows, wherein the wheel hub can be made of two layers which are an inner and outer layer, the outer layer can be made into a flywheel structure, or connect the flywheel, the inner layer do not rotate, the outer layer rotates, the power is installed in other parts of the motor, through including but not limited to gears, chains, belts, rocker arms, rods, and other mechanical devices, driving the inner layer or the outer layer flywheel structure, so to drive wheel hub and tyre.

The characteristics of the brake discs described in the disclosure are as follows, since the brake discs and the wheel hub rotate simultaneously while the brake discs and the wheel hub motor are concentric, when the brake calipers clamp on the brake disc function, one can stop the wheel hub, and the current disk brake and/or drum brake systems can be directly installed to the above three kinds of rotation modes.

There are the following three modes for the wheel hub motor and the wheel hub to rotate (1) The outer layer does not rotate, the inner layer and/or the axis of the wheel motor rotate, (2) the inner layer of the wheel hub motor and/or the axis is fixed, the outer layer of the wheel hub motor rotate, (3) the power of the motor is installed in other parts outside the tire, through the mechanical devices driving the flywheel structure of the hub.

The characteristics of the horizontal rotary disc described in the disclosure are as follows, wherein the horizontal rotary disc is connected to the steering wheel, when one operate the steering wheel to turn, the steering wheel is connected to the electric power to drive the horizontal steering motor, the horizontal steering motor rotates the horizontal rotary disc with the teeth, because the non-rotating layer of the wheel hub motor's is fixed in the horizontal rotary disc, so when the horizontal rotary disc rotates, the wheels and tyres will rotate in the same direction and angles with the horizontal rotary disc, therefore, steering the vehicle can be accomplished, the wheel hub motor is locked on the horizontal rotary disc, the horizontal steering motors, teeth, bearings, the horizontal rotary disc are the parts to assist the rotation of the horizontal rotary disc, the horizontal rotary disc can control the tyres to turn from 0 to 360 degrees, the system can transfer the loading of the vehicle to the ground through the housing and A-arm connected to the vehicle's chassis, the vehicle's load through the system to the ground, there are spaces in the horizontal rotary disc leaving room for tire rotation and for the braking system to operate, and the moving parts such as bearings can assist the horizontal rotary disc to rotate which allow the coordination of the steering angles of each tire and/or each set of tyres such as front rows of tyres, rear rows of tyres, inside rows of tyres, outside rows of tyres, so the best coordination of the steering angles of the inside rows of tyres and the steering angles of the outside rows of tyres can be achieved at every steering angle of all the turning radiuses of different vehicle speeds.

The characteristics of the horizontal steering motors described in the disclosure are as follows, wherein the horizontal steering motors utilize non-traditional energy supply system, utilize electricity for power supply, can control independently the horizontal rotation direction and angles of the horizontal rotary disc which may turn clockwise or counterclockwise independently and control the revolutions per minute independently.

The characteristics of the teeth described in the disclosure are as follows, wherein the teeth are connected with the horizontal rotary disc which rotate with the horizontal steering motors and drive the horizontal rotary disc.

The characteristics of the control box described in the disclosure are as follows, wherein the control box is comprised of a control panel and a single-chip microcomputer, the control panel can be controlled by the touch screen, the key components, the SCM is connected to the steering wheel sensor, when the steering wheel turns of a certain angles, the single chip microcomputer issues signals to the horizontal steering motor, so that the horizontal steering motor controls the steering angles of the vehicle, one can control several different steering modes, steering angles, the steering mode can be preset, or adjusting to preferred steering modes manually while driving, the control box can control the steering angles of the wheels so that the steering angles of the inside wheels and the steering angles of the outside wheels are different but coordinated to each other while the vehicle is turning, and the angles of coordination of the inside wheels and outside wheels are different at each steering speed of each steering radius while the vehic le turns, and the steering directions and angles of the rear wheels can be different or even opposite to the steering directions and angles of the front wheels.

### BRIEF DESCRIPTION OF THE DRAWINGS

Fig. 1 illustrates a floor plan of the steering system and the self-powered wheels of the disclosure.
Fig. 2 illustrates a section drawing of the steering system, which can be seen from the section symbol on Figure 1.
Figure 3 illustrates a top view of the steering system and the self-powered wheels. The horizontal steering motor can rotate the horizontal rotary disc 360 degrees so the wheels can be steered 360 degrees. When the self-powered wheels are steered clockwise 90 degrees to the dotted positions, the driver can perform parallel parking.
Fig. 4 illustrates a three dimensional perspective of the steering system.

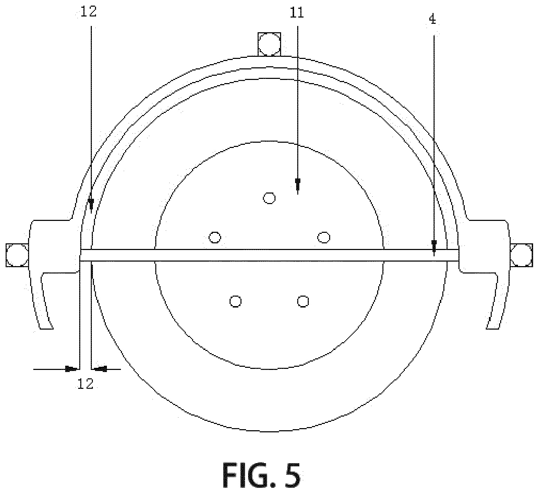

Fig. 5 illustrates an exterior view of the steering system and the self-powered wheels.
Fig. 6 illustrates a gyration with the center of gravity of the vehicle in situ with this disclosure: The four self-powered wheels can coordinate to each other in which each self-powered wheel turns 30 degrees to 60 degrees so the vehicle can gyrate with the center of gravity. Therefore, a driver can gyrate itself so a U-turn can be done without a steering radius.
Fig. 7 illustrates high speed turnings of the vehicle with this disclosure.
Fig. 8 illustrates low speed turnings of the vehicle with this disclosure.
Fig. 9 illustrates parallel parking of the vehicle with this disclosure.
Fig. 10 illustrates a 45-degree diagonal movement of the vehicle with this disclosure from a static position. It also illustrates a vehicle with this disclosure can perform an oblique movement from a static position. Fig. 10 is simply an example.

### CODEING RULES

One code represents one part, and the same code appears in different drawings.

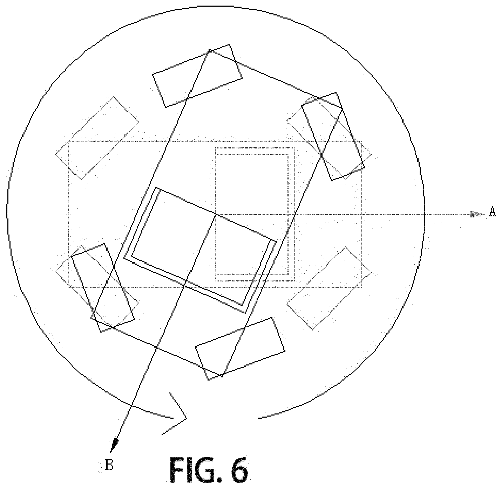

The codes of the parts illustrate connections between these parts. Fig. 6-9 are diagrams to illustrate the practicability of the disclosure so the codes are no longer coded in Fig.6-9.

### THE DESCRIPTIONS OF PARTS CODING IN ASCENDING ORDER

1 Horizontal steering motors.
2 Teeth.
3 Bearing balls.
4 A horizontal rotary disc: It is a big gear with teethes around and parallel to the ground. The wheel hub is mounted in the horizontal rotary disc and vertical to the ground.
5 Brake discs.
6 Spaces for rotation of the brake discs and rotating shafts.
7 A rotating shaft.
8 Fixing members.
9 An inner layer of the wheel hub motor.
10 A tyre.
11 A wheel hub.
12 Spaces for wheel rotation.
13 Operation spaces for replacing the tyre.
14 A housing can protect the tyre and the horizontal rotary disc. The weight of the vehicle transmits through the housings to the tires.
15 Brake calipers.
16 An outer layer of the wheel hub motor.
17 A-arm transfers the weight of the chassis to the housing.
18 A control box can control the turning modes and turn angles of each wheel.
19 Single chip microcomputers.
20 A control panel.
21 Sensors are installed on the steering control mechanism and connected to the control box.
22 Connecting rods connect the brake discs in different locations.

### DETAILED DESCRIPTION OF THE EMBODIMENTS

The disclosure is further explained by combining the drawings and embodiments, and the applications are explained. The following description is presented to enable one of ordinary skill in the art to make and use the disclosure and is provided in the context of a patent application and its requirement. Various modifications to the preferred embodiments and the generic principles described herein will be readily apparent to those skilled in the art. Thus, the present disclosure is not intended to be limited to the embodiments shown but is to be accorded the widest scope consistent with the principles and features described herein.

### EMBODIMENT 1:

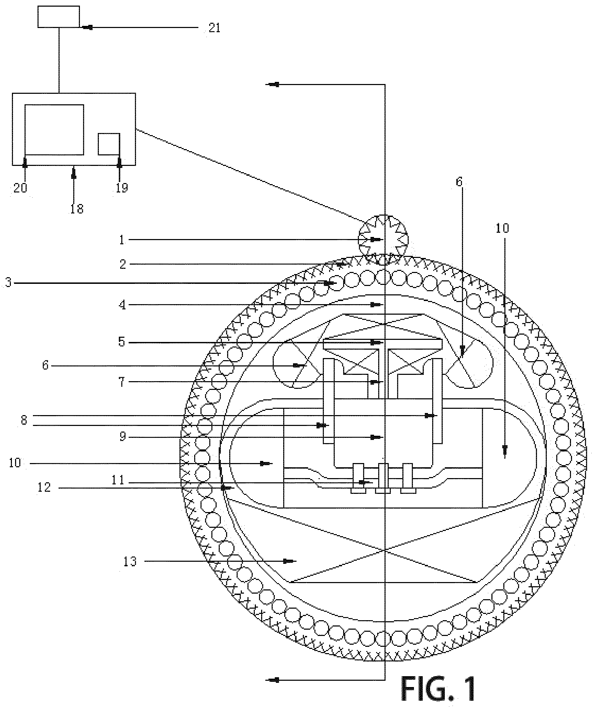

As described in Figure 1, when the steering wheel rotates, the sensors on the steering wheel senses the rotation angle and issues the signal to the SCM in control box (18). SCM issues the signal to the horizontal steering motor (1) which rotates the horizontal rotatory disc (4) with the teeth (2). Since the outer layer (16) of the wheel hub motor is mounted on the horizontal rotary disc (4), so when the horizontal rotary disc (4) rotates, the wheel hub (11) and the tyre (10) are also rotated in the same direction and angle horizontally with the horizontal rotary disc (4), so that the purpose of the steering can be achieved. The horizontal rotary disc (4) is parallel to the ground and the wheel hub (11) is perpendicular to the ground plus the wheel hub (11) is mounted to the horizontal rotary disc (4), so the horizontal rotary disc (4) can rotate the tyre (10), to achieve the goal of the turning. In addition, the wheel hub motor is divided into two layers. The outer layer of the wheel hub motor (16) is mounted on the horizontal rotary disc (4), so the wheel hub motor can horizontally turn with the horizontal rotary disc (4) which drives the wheel hub (11) and the tyre (10) to turn left or right. The wheel hub (11) is mounted in the inner layer of the wheel hub motor (9), and the inner layer is the central rotating layer. As the inner layer of the wheel hub motor (9) vertically rotates the wheel hub (11) and the tire (10) clockwise or counterclockwise, the vehicle can move forward or backward.

The steering system is mounted on the horizontal rotary disc (4) and the horizontal rotary disc (4) is positioned on the general wheel position outside the chassis of the vehicle. The horizontal rotary disc (4) is a large gear, parallel to the ground, a large round plate with teeth (2) around to bite with the teeth (2) of the horizontal steering motor (1), so the horizontal steering motor (1) can rotate the horizontal rotary disc (4).

### EMBODIMENT 2:

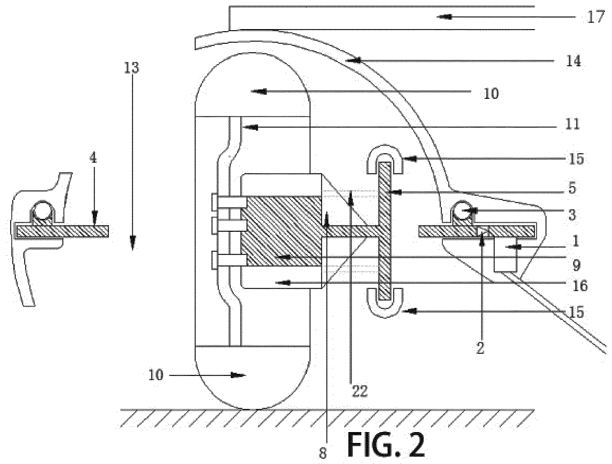

As shown in the section drawing in Fig. 2, parts' positions correspond to the figure 1 floor plan. The wheel hub motor (9) is mounted in the wheel hub (11) and it extends a rotating shaft (7) which connect to the brake discs (5). One, two, or more brake calipers (15) clamp on this brake discs (5), to stop the vehicle.

As shown in Fig. 2, when the rotating layer of the wheel hub motor is located to the outer layer of the wheel hub motor, the inner layer of the wheel hub motor and axis are mounted on the horizontal rotary disc for this setup. At this setup, the inner layer of the wheel hub motor is the non-rotating layer of the wheel hub motor, so the connecting rods (22), the dotted lines of Fig. 2, relocate to connect the brake discs to the outer layer of the wheel hub motor.

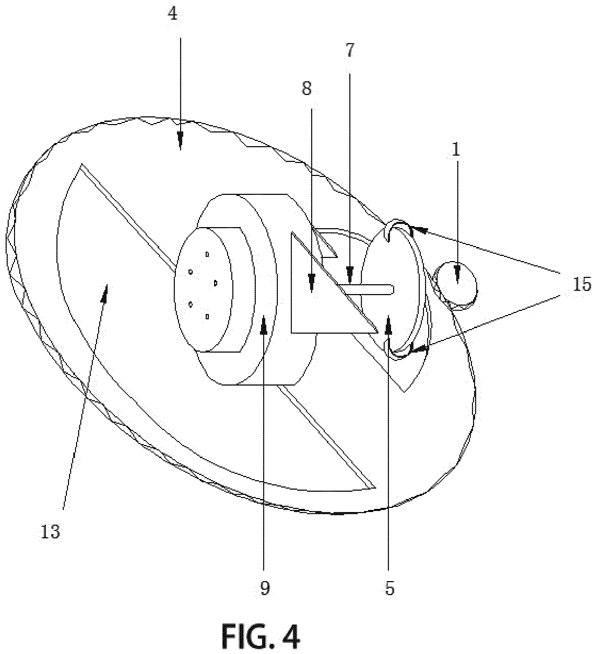

As shown in Fig. 1 and Fig. 4, spaces are reserved on the horizontal rotary disc (4). The spaces for wheel rotation (12) are left around the tyre (10), and the operation spaces for replacing the tyre. (13) are left. The rotating spaces (6) for the brake discs (5) and the rotating shafts (7) are also left.

### EMBODIMENT 3:

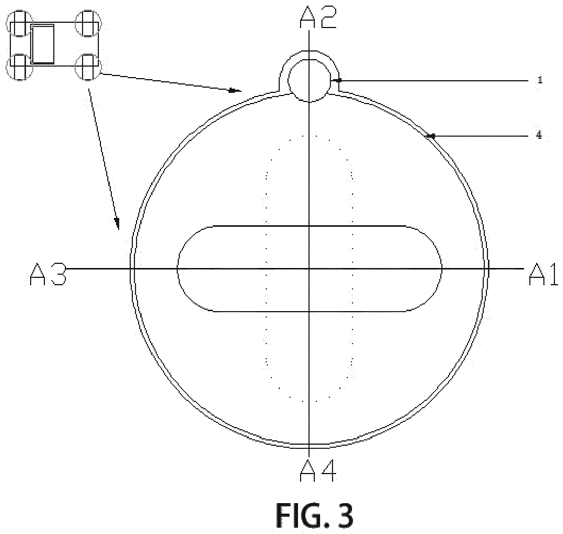

As shown in Fig. 3, the horizontal steering motor (1) of the A2 point utilizes its teeth (2) to turn the horizontal rotary disc (4). The wheel hub motor (9) is mounted on the horizontal rotary disc (4), so the tyre (10) can be turned to A1 point from A3 point clockwise or counterclockwise, even be turned 360 degrees back to A3 point.

### EMBODIMENT 4:

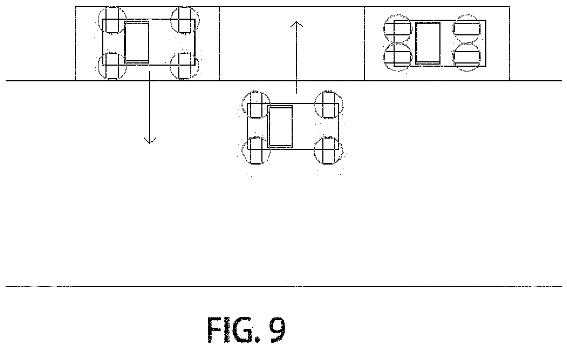

As shown in Fig. 9 parallel parking diagram and fig. 3, without the limitation to the steering angles of the wheels by the transmission shafts, the horizontal rotary disc (4) can rotate 90 degrees clockwise and rotate to a position perpendicular to the vehicle which allows parallel parking. When the wheel turns 90 degrees counterclockwise from a static position, one can drive the vehicle parallelly out of the parking space. Or the driver can make the horizontal rotary disc (4) to rotate 90 degrees clockwise to perform parallel parking. When the driver wants to leave the parking space, the driver can make the wheel hub motor (9) to rotate counterclockwise to drive the vehicle parallelly out of the parking space.

### EMBODIMENT 5:

As shown in Fig. 6, the four self-powered wheels can coordinate to each other in which each self-powered wheel turns 30 degrees to 60 degrees so the vehicle can gyrate with the center of gravity. Therefore, a driver can gyrate itself so a U-turn can be done without a steering radius. The vehicle can gyrate itself to any direction. For example, as shown in Fig. 6, the vehicle was facing point A, then it gyrates to face point B..

The inside tyre is suffering more pressure than outside tyre while the steering angles are the same for the inside tyre and outside tyre during steering. The driver controls the steering angles and the steering modes while the control box (18) automatically coordinates the steering angles of inside tyre and outside tyre. The best coordination of the steering angle can be achieved at each steering radius of each speed. Assuming that the rotating angle of 0.1 degrees per interval, every 1 kilometers per hour for an interval, to reach a hypothetical result, 30 kilometers per hour, the best steering angles are: The inside tyre turns 15 degrees, the outside tyre turns 14.5 degrees. Current technology may partially and minimally achieve the coordination by complex mechanical devices. The disclosure can reduce tyres' wear-out and minimize air pollution caused by the tyer powers. Current automobile design use mechanical rods to realize this functionality but can ONLY achieve small steering angles less than 5 degrees. Due to mechanical control, Current automobile designs CAN NOT achieve the delicate coordination of this disclosure described above. Current automobile designs CAN NOT coordinates the steering angles of inside tyre and outside tyre with steering angles larger than 5 degrees; Current automobile designs in this perspective will wear out soon. So even a small steering angle CAN NOT achieve the coordination of different steering angles of inside tyre and outside tyre after the use of a period of time soon.

### EMBODIMENT 6:

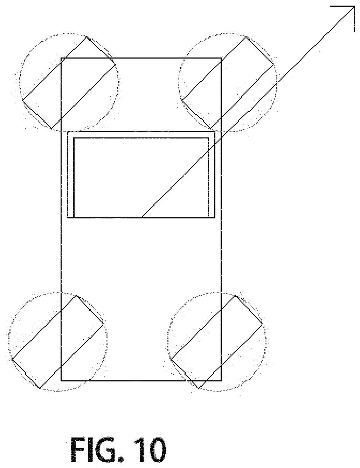

As shown in Fig. 10, the four self-powered wheels can move together to an arbitrarily angle, so a vehicle with this disclosure can move to any direction obliquely from a static position without changing the angles of the vehicle body. For example, as shown in Fig. 10 when four wheels all turn 45 degrees, the vehicle can move obliquely to a right 45-degree direction with the vehicle head facing up.

As shown in Fig. 4, although there is no such demand at present, this disclosure allows four wheels to turn 360 degrees independently. The applications in reality for large steering angles such as 300 degrees might be developed in the future.

There are three basic steering modes and two combination steering modes in accordance with the coordination of the front wheel and rear wheel. Different steering modes can be switched via the control box. The steering modes can pre-setup or to switch while driving.

Traditional steering mode: the front wheels turn to the direction that the driver wants, the rear wheels do not move.

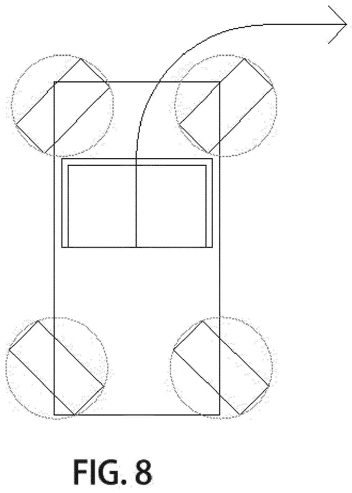

Fig. 8 illustrates the Low-Speed Steering Mode: During a right turn, the front wheels steer to the right, the rear wheels steer to the left, the steering radius will be smaller. The front wheels and rear wheels can steer to the opposite direction during low-speed turns which will reduce the steering radius and increase the vehicle's maneuverability.

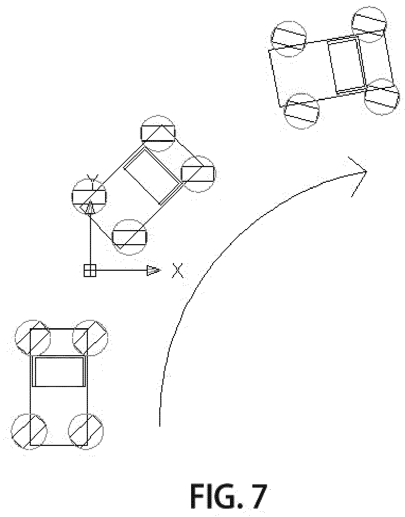

Fig. 7 illustrates the High-Speed Steering Mode: During a right turn, the front wheels steer to the right, the rear wheels also steer to the right, as the center of gravity drifts at high speed, all the wheels grip the ground maximally at the same time. Since the frictions of all the tyres to the ground increase so is the security of the vehicle. The steering becomes more efficient and safe while drifting is minimized.

Traditional Steering Mode plus High-Speed Steering Mode: When the steering speed is less than a pre-set speed, the vehicle will turn in Traditional Steering Mode. The speed can be pre-set or manually adjust the control box while driving. This speed is assumed to be 40 kilometers per hour. When the steering speed is greater than a pre-set speed, the vehicle will turn in High-Speed Steering Mode.

Low-Speed Steering Mode plus High-Speed Steering Mode: When the steering speed is less than a pre-set speed, the vehicle will turn in Low-Speed Steering Mode. The speed can be pre-set or manually adjust the control box while driving. This speed is assumed to be 40 kilometers per hour. When the steering speed is greater than a pre-set speed, the vehicle will turn in High-Speed Steering Mode.

The foregoing description of illustrated embodiments of the present disclosure, including what is described in the Abstract, is not precise forms disclosed herein. While specific embodiments of, and examples for, the disclosure are described herein for illustrative purposes only, various equivalent modifications are possible within the spirit and scope of the present disclosures, as those skilled in the relevant art will recognize and appreciate. As indicated, these modifications may be made to the present disclosure in light of the foregoing description of illustrated embodiments of the present disclosure and are to be included within the spirit and scope of the present disclosure.

## Claims

1. A omnidirectional power steering system which can be used on wheeled vehicles that can travel on land without relying on tracks, the device comprises horizontal steering motors, teeth, bearing balls, a horizontal rotary disc, brake discs, a space for rotation of the brake discs, a rotating shaft, fixing members, an inner layer of the wheel hub motor, a tyre, a wheel hub, a space for tyre rotation, an operation space for replacing the tyre, a housing, brake calipers, an outer layer of the wheel hub motor, an A-arm, a control box, single chip microcomputers, a control panel, sensors, connecting rods, each tyre can rotate to any angle independently, and can also be matched with other tyres to rotate a specific angle, the horizontal rotary disc is a horizontal large gear, a wheel hub is arranged in the middle space, and a wheel hub motor is mounted in the wheel hub, and the wheel hub motor is divided into the rotating layer and the non-rotating layer, the non-rotating layer is fixed on the horizontal rotary disc, the rotating layer of the wheel hub motor vertically rotates the wheel frame to drive the wheels to move forwards and backwards, the independent steering power source rotates the horizontal rotary disc horizontally by a gear which it rotates clockwise or counterclockwise to achieve the purpose of steering left or right, the rotating angles of the inner wheel and the outer wheel are controlled by a control box and the optimal cooperation of the inner tyres' rotation angles and the outer tyres' rotation angles by different speeds can be achieved.

2. The omnidirectional power steering system as set forth in claim 1, wherein the wheel hub motor rotates vertically which is mounted in a wheel hub, is used for rotating a wheel hub and a tyre, divided into two layers, an inner layer of the wheel hub motor and the outer layer of the wheel hub motor, at the moment, the outer layer of the wheel hub motor is a non-rotating layer and is fixed on the horizontal rotary disc which can rotate 360 degrees horizontally therefore driving the wheel hub and the tyre turn, the wheel hub is locked on the inner layer of the wheel hub motor, the inner layer is the center of the rotating layer which rotates vertically to drive the wheel hub and the tyre to move forwards and backwards, and the rotating direction can be controlled independently, the rotating layer of the wheel hub motor can rotate vertically clockwise or counterclockwise and the rotation speed can be controlled individually, the functions of the inner layer and the outer layer of the wheel hub motor can be interchanged, then the outer layer of the wheel hub motor can be used as a vertical rotating layer to drive the wheel hub and the tyre, the wheel hub is fixed on the outer layer of the wheel hub motor, the inner layer of the wheel hub motor is fixed on the horizontal rotary disc instead, at the moment, the vertical inner layer is a non-rotating layer, can turn clockwise or counterclockwise omnidirectional with the horizontal rotary disc, the wheel hub motor can also be mounted at any part of the wheel to drive the rotating layer and/or the rotating shaft of the wheel to rotate through the transmission devices.

3. The omnidirectional power steering system as set forth in claim 1, wherein the wheel hub can be made of two layers which are an inner and outer layer, the outer layer can be made into a flywheel structure, or connect the flywheel, the inner layer do not rotate, the outer layer rotates, the power is installed in other parts of the motor, through including but not limited to gears, chains, belts, rocker arms, rods, and other mechanical devices, driving the inner layer or the outer layer flywheel structure, so to drive wheel hub and tyre.

4. The omnidirectional power steering system as set forth in claim 1, wherein there are the following three modes for the wheel hub motor and the wheel hub to rotate (1) The outer layer does not rotate, the inner layer and/or the axis of the wheel motor rotate, (2) the inner layer of the wheel hub motor and/or the axis is fixed, the outer layer of the wheel hub motor rotate, (3) the power of the motor is installed in other parts outside the tire, through the mechanical devices driving the flywheel structure of the hub, since the brake discs and the wheel hub rotate simultaneously while the brake discs and the wheel hub motor are concentric, when the brake calipers work on the brake discs, one can stop the wheel hub, and the current disc brake and/or drum brake systems can be directly installed to the above three kinds of rotation modes.

5. The omnidirectional power steering system as set forth in claim 1, wherein the horizontal rotary disc is connected to the steering wheel, when one operate the steering wheel to turn, the steering wheel is connected to the electric power to drive the horizontal steering motor, the horizontal steering motor rotates the horizontal rotary disc with the teeth, because the non-rotating layer of the wheel hub motor's is fixed in the horizontal rotary disc, so when the horizontal rotary disc rotates, the wheels and tyres will rotate in the same direction and angles with the horizontal rotary disc, therefore, steering the vehicle can be accomplished, the wheel hub motor is locked on the horizontal rotary disc, the horizontal steering motors, teeth, bearings, the horizontal rotary disc are the parts to assist the rotation of the horizontal rotary disc, the horizontal rotary disc can control the tyres to turn from 0 to 360 degrees, the system can transfer the loading of the vehicle to the ground through the housing and A-arm connected to the vehicle's chassis, the vehicle's load through the system to the ground, there are spaces in the horizontal rotary disc leaving room for tire rotation and for the braking system to operate, and the moving parts such as bearings can assist the horizontal rotary disc to rotate which allow the coordination of the steering angles of each tire and/or each set of tyres such as front rows of tyres, rear rows of tyres, inside rows of tyres, outside rows of tyres, so the best coordination of the steering angles of the inside rows of tyres and the steering angles of the outside rows of tyres can be achieved at every steering angle of all the turning radiuses of different vehicle speeds.

6. The omnidirectional power steering system as set forth in claim 1, wherein the horizontal steering motors utilize non-traditional energy supply system, utilize electricity for power supply, can control independently the horizontal rotation direction and angles of the horizontal rotary disc which may turn clockwise or counterclockwise independently and control the revolutions per minute independently.

7. The omnidirectional power steering system as set forth in claim 1, wherein the teeth are connected with the horizontal rotary disc which rotate with the horizontal steering motors and drive the horizontal rotary disc.

8. The omnidirectional power steering system as set forth in claim 1, wherein the control box is comprised of a control panel and a single-chip microcomputer, the control panel can be controlled by the touch screen, the key components, the SCM is connected to the steering wheel sensor, when the steering wheel turns of a certain angles, the single chip microcomputer issues signals to the horizontal steering motor, so that the horizontal steering motor controls the steering angles of the vehicle, one can control several different steering modes, steering angles, the steering mode can be preset, or adjusting to preferred steering modes manually while driving, the control box can control the steering angles of the wheels so that the steering angles of the inside wheels and the steering angles of the outside wheels are different but coordinated to each other while the vehicle is turning, and the angles of coordination of the inside wheels and outside wheels are different at each steering speed of each steering radius while the vehicle turns, and the steering directions and angles of the rear wheels can be different to the steering directions and angles of the front wheels.
